**Europäisches Patentamt**

**European Patent Office**

**Office européen des brevets**

(11) Veröffentlichungsnummer: **0 218 975**
**B1**

(12) **EUROPÄISCHE PATENTSCHRIFT**

(45) Veröffentlichungstag der Patentschrift:
14.03.90

(51) Int. Cl.⁴: **B44C 1/17**

(21) Anmeldenummer: 86113344.5

(22) Anmeldetag: 29.09.86

(54) Abziehbild mit einem auf einem keramischen Zwischenprodukt anzubringenden Farbdekor.

(30) Priorität: 15.10.85 DE 3536628

(43) Veröffentlichungstag der Anmeldung:
22.04.87 Patentblatt 87/17

(45) Bekanntmachung des Hinweises auf die Patenterteilung:
14.03.90 Patentblatt 90/11

(84) Benannte Vertragsstaaten:
DE FR GB LU

(56) Entgegenhaltungen:
DE-A- 2 031 825
DE-B- 1 761 996
FR-A- 2 121 139
FR-A- 2 285 635
US-A- 3 317 433

(73) Patentinhaber: Keram-Druck Keramische Buntdrucke GmbH, Untertürkheimer Strasse 14,
D-6600 Saarbrücken(DE)

(72) Erfinder: Schneider, Birgit, Dipl.-Chem., Am Kleinen Weiher 7, D-6650 Homburg(DE)
Erfinder: Eckert, Günter, Bahnhofstrasse 88,
D-6601 Kleinblittersdorf(DE)

(74) Vertreter: Bernhardt, Winfrid, Dr.-Ing.,
Kobenhüttenweg 43, D-6600 Saarbrücken(DE)

## Beschreibung

Die Erfindung betrifft ein Abziehbild mit einer eine haftungsvermittelnde Substanz enthaltenden Schicht und einem mittels dieser auf einem keramischen Zwischenprodukt anzubringenden keramischen Farbdekor.

Abziehbilder dieser Art für keramische Aufglasurdekore sind in der Regel durch eine Schicht aus Gummi arabicum und Dextrin mit einem Trägerpapier verbunden. Da dies wasserlösliche Klebstoffe sind, kann das Abziehbild nach Eintauchen in Wasser von dem Trägerpapier gelöst (abgezogen) werden und mittels des an ihm haftengebliebenen Anteils dieser Klebstoffe auf dem keramischen Zwischenprodukt befestigt werden. Im anschließenden Dekorbrand zersetzen sich und verdampfen die organischen Bestandteile des Abziehbildes rückstandslos, und die keramischen Farbkörper versintern mit der Glasur.

Für Unterglasurdekore reicht eine solche Verbindung nicht aus. Sie führt auf dem porösen und rauhen Biskuitscherben zu keiner genügenden Haftung. Hier streicht man die zu dekorierende Oberfläche zunächst mit einem Kleber ein, der sich in der Regel aus Wasser, einem Lösungsmittel für die organischen Druckmedien und einem wasserlöslichen Polymer als Kleber, z.B. Acrylsäure oder Zellulosederivate, zusammensetzt, und bringt erst darauf das Abziehbild. Der aufgestrichene Kleber füllt die Poreneingänge und die Vertiefungen der rauhen Oberfläche aus und stellt eine lückenlose Verbindung zwischen dem Scherben und dem Abziehbild her. Darüber hinaus löst er das organische Bindemittel der keramischen Farbkörper an, so daß der Kleber und das Abziehbild mit den Farbkörpern fließend ineinander übergehen und eine innige Verbindung bilden. In der Aufheizphase des keramischen Brandes zerfallen und verflüchtigen sich der Kleber und das Bindemittel der Farbkörper und im übrigen auch die Lackmaske. Dabei sinken die keramischen Farbkörper in die Vertiefungen der rauhen und porösen Scherbenoberfläche hinein und lagern sich schließlich unmittelbar auf dieser ab.

Für das Anbringen von Buchstaben oder anderen Symbolen auf verschiedensten Gegenständen sind aus der DE-A 2 031 825, der FR-A 2 285 635 und der DE-A 1 761 996 Trockenübertragungsmittel bekannt, die eine haftungsvermittelnde Substanz in Mikrokapseln enthalten, die bei Druckanwendung platzen und ihren Inhalt freigeben.

Aus der US-A 3 317 433 sind Kapseln bekannt, die durch Hitze zerstörbar sind, und zwar in der Weise, daß sie in der Kapselfüllung und/oder in der Kapselwandung einen Stoff aufweisen, der in der Hitze ein Gas entwickelt. Die Kapseln sind vorgeschlagen zur Verkapselung von verdampfenden Lösungsmitteln oder Ölfraktionen, von Stoffen, die mit Umgebungsstoffen reagieren oder die verderblich sind oder die sonst vor Bakterien o.dgl. geschützt werden müssen, von Vitamin-A-Ölen und sich verflüchtigen synthetischen Ölen, von Klebstoffen, von Fetten, von medizinischen Präparaten, von Farbstoffen, von Ruß, von Eisenoxid, von Aspirin und vielem mehr. Eingelagert in Einbettungen sollen die Kapseln ggf. Füllungen freigeben, die dann mit den Umgebungsstoffen reagieren, darunter Lösungsmittel, die Klebstoffe aktivieren.

Der Erfindung liegt als Aufgabe zugrunde, beim Anbringen von Abziehbildern mit Dekoren auf keramischen Zwischenprodukten die Haftungsvermittlung einfacher als bisher zu bewerkstelligen.

Die Erfindung greift zu diesem Zweck die Befestigungsart der Trockenübertragungsmittel mit den Mikrokapseln auf, verläßt dabei aber die dort übliche alleinige Zerstörung der Mikrokapseln durch die äußere Druckanwendung:

Gemäß der Erfindung ist die haftungsvermittelnde Substanz in Mikrokapseln eingeschlossen, die durch thermische und/oder osmotische Erhöhung ihres Innendruckes, allein oder zusammen mit äußerer Druckanwendung und/oder einem Anlösen, zerstörbar sind.

Die in der Regel flüssige, häufig auch gesundheitsschädigende, haftungsvermittelnde Substanz für die Dekor-Abziehbilder bleibt hier in den Mikrokapseln bis zur Anwendung ein Trockenmaterial von neutralem Verhalten. Daraus ergeben sich verschiedene vorteilhafte Möglichkeiten der Anwendung, insbesondere der Mechanisierung.

Um den Innendruck thermisch zu erhöhen, kann man z.B. auch einen mit der haftungsvermittelnden Substanz verträglichen Stoff in die Mikrokapseln mit einschließen, dessen Dampfdruck bei einer erhöhten Temperatur stark ansteigt. Bei der Anwendung bewirkt man dann eine entsprechende Temperaturerhöhung. Das Abziehbild kann beispielsweise unmittelbar vor dem Aufbringen durch Wärmestrahlung oder Mikrowellenimpulse erhitzt werden oder auf eine erhitzte Oberfläche der Biskuitware aufgedrückt werden.

Für eine osmotische Erhöhung des Innendruckes bedarf es einer semipermeablen Kapselwandung. Auch in diesem Falle kann man einen mit der haftungsvermittelnden Substanz verträglichen Stoff zugeben, der einen höheren osmotischen Druck entwickelt. Um den Druck zu erzeugen, wässert man dann den Haftungsvermittler vor der Anwendung.

Schließlich kommt auch eine Materialauswahl der Mikrokapseln derart in Betracht, daß die Mikrokapseln bei erhöhter Temperatur von der haftungsvermittelnden Substanz angelöst werden oder daß sie durch ein äußerlich angewandtes Lösungsmittel zerstört werden.

Im folgenden sind vorteilhafte Ausgestaltungen der Erfindung angegeben.

Als besonders geeignete Größe der Mikrokapseln werden Durchmesser zwischen 40 und 60 $\mu$ angesehen. Zwar sind mit Rücksicht auf den nicht geringen Mengenbedarf an haftungsvermittelnder Substanz möglichst große Mikrokapseln, etwa bis hinauf zu 200 $\mu$, angebracht. Auch sind die größeren Kapseln leichter zerstörbar. Andererseits können größere Mikrokapseln eher zu Störungen führen, indem ihre leere Hülle beispielsweise eine Pore vollständig überdeckt oder sonst einen Oberflächenabschnitt vor der haftungsvermittelnden Substanz verdeckt.

In aller Regel werden die Mikrokapseln aus einem bei Erhitzung sich zersetzenden und sich rückstandslos verflüchtigenden Material bestehen, z.B. einem Acrylat, damit keine störende Reste verbleiben.

Aus dem gleichen Grunde wie bei den oben erwähnten Klebern enthält die haftungsvermittelnde Substanz vorzugsweise ein Lösungsmittel für das organische Bindemittel der keramischen Farbkörper, z.B. Trimethylbenzol oder aliphatische Kohlenwasserstoffe mit Restanteilen von Aromaten oder Ketonen.

Die haftungsvermittelnde Substanz kann auch ein kristalliner Kleber sein oder einen solchen aufweisen. Die Verkapselung macht auch die Handhabung solcher Stoffe einfacher, sicherer und ggf. körperverträglicher.

Insbesondere als Schicht eines Abziehbildes für Unterglasurdekorierung hat der neue Haftungsvermittler den Vorteil, unabhängig von Wasser zu sein, das der oben erwähnte Kleber immer enthält. Daraus ergeben sich neue Möglichkeiten der Stoffauswahl bis hin zu der Lackmaske.

Besonders vorteilhaft ist die Möglichkeit, in Weiterbildung der Erfindung mit der Schicht des neuen Haftungsvermittlers an einem Abziehbild, das durch Erwärmung von seinem Trägermaterial ablösbar ist, eine hydrophile, bevorzugt wasserlösliche, Lackmaske als Deckschicht zu kombinieren.

Dies bedeutet eine Lösung des bisher immer kritischen Problems, eine genügende Haftung des Glasurschlickers auf der Lackmaske des Abziehbildes zu erzielen. Während die bisherige Unterglasurdekoriertechnik wegen der notwendigen Anwendung des schon mehrfach erwähnten wasserlöslichen Klebers auch ein durch Wasser von seinem Trägerpapier ablösbares Abziehbild verwendet, dessen Lackmaske demzufolge nicht gleichfalls wasserlöslich sein kann, weil sie beim und nach dem Abziehen das Bild zusammenhalten muß, kann das Abziehbild mit dem keines Wassers bedürftigen neuen Haftungsvermittler durch Erwärmung von seinem Trägermaterial ablösbar sein, etwa in der an sich bekannten Weise mit einer Zwischenschicht aus "Wachs", und demzufolge eine wasserlösliche Lackmaske haben, mit der sich der Glasurschlicker dementsprechend gut verbindet.

Solche Abziehbilder können in an sich bekannter Weise voll mechanisch von ihrem Trägermaterial gelöst und mittels eines weichen Stempels an dem zu dekorierenden Teil aufgedrückt werden, wobei die geplatzten oder platzenden Mikrokapseln die haftungsvermittelnde Substanz freigeben, die auf diese Weise genau in der benötigten Menge für die Anbringung des Abziehbilds auf dem Biskuitscherben zur Verfügung gestellt werden kann und dies darüber hinaus in gleichmäßiger Verteilung.

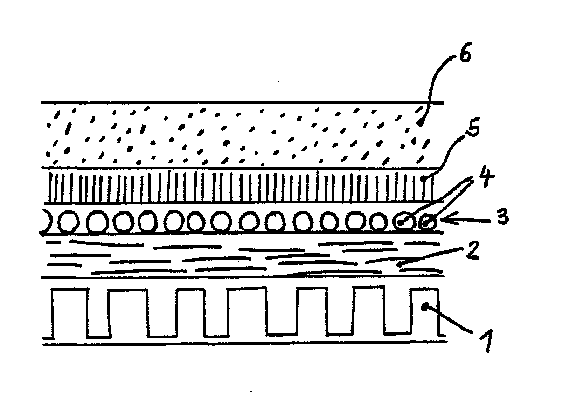

Die Zeichnung gibt ein Ausführungsbeispiel der Erfindung wieder.

Sie zeigt ausschnittsweise einen Querschnitt durch ein Abziehbild für Unterglasurdekorierung:

Ein Trägerpapier 1 ist mit einer schmelzbaren Schicht 2 versehen. Auf dieser befindet sich eine Schicht 3 aus Mikrokapseln 4, die eine haftungsvermittelnde Substanz enthalten. Auf die Schicht 3 ist im Siebdruckverfahren ein Dekorbild gedruckt; die Druckschicht ist mit 5 bezeichnet. Darüber ist eine Lackmaske 6 aufgebracht.

Bei Erhitzung auf etwa 100° erweicht die schmelzbare Schicht 2, und die, durch die Lackmaske 6 zusammengehaltenen, Schichten 3, 5 und 6 können von dem mit der schmelzbaren Schicht 2 versehenen Trägerpapier 1 abgezogen werden.

**Patentansprüche**

1. Abziehbild mit einer eine haftungsvermittelnde Substanz enthaltenden Schicht und einem mittels dieser auf einem keramischen Zwischenprodukt anzubringenden keramischen Farbdekor, wobei die haftungsvermittelnde Substanz in Mikrokapseln (4) eingeschlossen ist, die durch thermische und/oder osmotische Erhöhung ihres Innendruckes, allein oder zusammen mit äußerer Druckanwendung und/oder einem Anlösen, zerstörbar sind.

2. Abziehbild nach Anspruch 1, dadurch gekennzeichnet, daß die Mikrokapseln (4) einen Durchmesser zwischen 5 und 200 μ, vorzugsweise im Durchschnitt von 40 bis 60 μ, aufweisen.

3. Abziehbild nach Anspruch 1 oder 2, dadurch gekennzeichnet, daß die Mikrokapseln (4) aus einem bei Erhitzung sich zersetzenden und sich verflüchtigenden Material bestehen.

4. Abziehbild nach einem der Ansprüche 1 bis 3, dadurch gekennzeichnet, daß die haftungsvermittelnde Substanz in an sich bekannter Weise ein Lösungsmittel für das organische Bindemittel der keramischen Farbkörper enthält.

5. Abziehbild nach einem der Ansprüche 1 bis 4, dadurch gekennzeichnet, daß die haftungsvermittelnde Substanz ein kristalliner Kleber ist oder einen solchen aufweist.

6. Abziehbild nach einem der Ansprüche 1 bis 5, dadurch gekennzeichnet, daß es durch Erwärmung von seinem Trägermaterial ablösbar ist.

7. Abziehbild nach Anspruch 6, dadurch gekennzeichnet, daß das keramische Farbdekor (5) ein solches für Unterglasurdekorierung ist und eine hydrophile, bevorzugt wasserlösliche, Deckschicht (6) aufweist.

**Claims**

1. A transfer picture having a layer containing an adhesion-producing substance and a ceramic coloured decoration to be applied on a ceramic intermediate product, in which the adhesion-producing substance is enclosed in microcapsules (4), which can be destroyed by the thermal and/or osmotic increase in its internal pressure, by itself or together with the external application of pressure and/or a dissolving process.

2. A transfer picture according to Claim 1, characterised in that the microcapsules (4) have a diameter of between 5 and 200 μ, preferably an average of from 40 to 60 μ.

3. A transfer picture according to Claim 1 or 2, characterised in that the microcapsules (4) are made of a material which decomposes and evaporates when heated.

4. A transfer picture according to one of Claims 1 to 3, characterised in that the adhesion-producing substance contains in a per se known way a solvent for the organic binding agent of the ceramic pigments.

5. A transfer picture according to one of Claims 1 to 4, characterised in that the adhesion-producing substance comprises a cristalline adhesive or similar.

6. A transfer picture according to one of Claims 1 to 5, characterised in that it can be detached from its backing material by heating.

7. A transfer picture according to Claim 6, characterised in that the ceramic coloured decoration (5) is for underglaze designs and comprises a hydrophile protective layer (6), which is preferably water-soluble.

## Revendications

1. Décalcomanie avec une couche contenant une substance assurant l'adhérence et une décoration colorée céramique appliquée au moyen de cette couche sur un produit intermédiaire céramique, la substance assurant l'adhérence étant enfermée dans des micro-capsules (4) qui peuvent être détruites par une augmentation thermique et/ou osmotique de leur pression intérieure, seule ou en association avec l'application d'une pression extérieure et/ou avec une dissolution.

2. Décalcomanie selon la revendication 1, caractérisée en ce que les micro-capsules (4) ont un diamètre compris entre 5 et 200 μ, de préférence, en moyenne, entre 40 et 60 μ.

3. Décalcomanie selon l'une des revendications 1 à 3, caractérisée en ce que les micro-capsules (4) sont constituées par un matériau qui se détruit et se volatilise sous l'action de la chaleur.

4. Décalcomanie selon l'une des revendications 1 à 3, caractérisée en ce que la substance assurant l'adhérence contient, d'une manière connue, un solvant du liant organique du colorant céramique.

5. Décalcomanie selon l'une des revendications 1 à 4, caractérisée en ce que la substance assurant l'adhérence est ou comporte un adhésif cristallin.

6. Décalcomanie selon l'une des revendications 1 à 5, caractérisée en ce qu'elle peut se détacher par chauffage de son matériau de support.

7. Décalcomanie selon la revendication 6, caractérisée en ce que la décoration colorée (5) est une décoration de sous-émail et comporte une couche de couverture (6) hydrophile, de préférence soluble dans l'eau.